# EUROPEAN PATENT SPECIFICATION

(11) **EP 0 482 094 B1**
(45) Date of publication and mention of the grant of the patent: **07.09.1994**
(21) Application number: 90911792.1
(22) Date of filing: 17.07.1990
(51) Int. Cl.: A23L 1/0522, A23L 1/09, A23L 1/308

(54) **METHOD FOR MAKING A REDUCED FAT FOODSTUFF**
HERSTELLUNGSVERFAHREN VON NAHRUNGSMITTELN MIT ERMÄSSIGTEM FETTGEHALT
PROCEDE DE PREPARATION DE PRODUITS ALIMENTAIRES A TENEUR REDUITE EN MATIERE GRASSE

(30) Priority: 19.07.1989 US 382253
(43) Date of publication of application: 29.04.1992
(73) Proprietor: AMERICAN MAIZE-PRODUCTS COMPANY, Stamford, CT 06904 (US)
(72) Inventor: FURCSIK, Susan, L., Lake Station, IN 46405 (US); MAURO, David, J., Dolton, IL 60419 (US); KORNACKI, Leonard, Calumet City, IL 60409 (US); FARON, Eugene, J., II, Valparaiso, IN 46383 (US); TURNAK, Frances, L., Hammond, IN 46375 (US); OWEN, Roger, Schererville, IN 46375 (US)
(74) Representative: Carmichael, David Andrew Halliday
(86) International application number: US9004013
(87) International publication number: WO9101091

(56) References cited:
- JP-A-56 058 466
- US-A- 3 769 027
- US-A- 3 962 465
- US-A- 3 986 890
- US-A- 4 510 166
- US-A- 4 726 957
- PATENT ABSTRACTS OF JAPAN vol. 005, no. 120 (C-065)4August 1981 &JP-56 058 466 ( TAKATSUJI MASAO ) 21 May 1981

## Description

This invention relates to foodstuffs and more particularly to a method for making a reduced fat foodstuff by replacing a portion of the fats and/or oils in the foodstuff with a high amylose starch hydrolysate.

Consumer awareness of the caloric content of foods has increased dramatically over the past few years and has brought about a demand for foods having a reduced fat content. This demand has created a need in the food industry to replace at least a portion of the fat and/or oil in prepared foodstuffs with a component that does not detract from the taste, appearance, smell and mouthfeel of the foodstuffs and which has reduced caloric content.

It has been suggested that certain starch hydrolysates may be used as fat and/or oil replacers in foods, see US Patent number 4,510,166 issued 9th April 1985, US Patent number 3,962,465 issued 8th June 1976, and US Patent number 3,986,890 issued 19th October 1976. The '166 patent teaches using starch hydrolysate having a DE less than 5 as a fat and/or oil replacer. A problem with these less than 5 DE starch hydrolysates is that they have poor taste and impart an undesirable starchy or roasted taste to the foodstuff. Additionally, it has been found that these less than 5 DE starches produce a gel that has a grey or tan colour which is also undesirable.

The '465 patent teaches a detailed stepwise process for converting starch to a starch hydrolysate having a DE from 5 to 25. This process is extremely long and tedious and is not deemed acceptable for a large commercial operation.

The '890 patent teaches mixing two different starch hydrolysates to make a product having a DE from 5 to 10.

It has now been discovered that a foodstuff with reduced fat content may be made by replacing at least a portion of the fat and/or oil in the foodstuff with water and an effective amount of a high amylose starch hydrolysate having a DE from 5 to 15 and having a peak average molecular weight less than about 10,000, said starch hydrolysate being made from a base starch having an apparent amylose content greater than 40%.

It has been found that an aqueous dispersion of the high amylose starch hydrolysate of the present invention possesses good gel strength, an important attribute in a fat replacer. The gels produced by the fat replacer of the present invention are smooth, creamy and white and do not have a sticky-pasty consistency.

It has also been found that the gels of the fat replacer of the present invention do not have a starchy or roasted flavour. This makes the fat replacer or the present invention a suitable substitute for natural fats and oils which generally have a non-distinct flavour.

Suitable forms of the fat replacer of the present invention are an aqueous dispersion of the hydrolysate and a paste.

The aqueous dispersion is formed by mixing the dried starch hydrolysate with water. The paste is formed by cooking the aqueous dispersion. Cooking entails raising the temperature of the dispersion to above 90°C and holding the dispersion at that temperature for 5 minutes while subjecting the dispersion to agitation. More preferably the temperature of the dispersion is raised to 100°C. Stirring is done in a conventional manner such as by an impeller. Gels are formed by cooling the paste.

In situ formation of the aqueous dispersion and paste can be performed. If the foodstuff contains water, then the high amylose starch hydrolysate of the present invention can be added directly to the foodstuff and mixed in. The aqueous dispersion will form therein. If the foodstuff containing the high amylose starch hydrolysate is then cooked, a paste will form. The paste, whether made in situ or prior to addition to the foodstuff is the preferred form of the fat replacer of the present invention.

An effective amount of the high amylose starch hydrolysate of the present invention is dispersed in water to form the fat replacer of the present invention. Preferably, the dispersion has a solids content of from 5% to 50% and more preferred is a dispersion with solids content of from 15% to 30%.

Starch obtained from corn, potato, wheat, rice, sago, tapioca, or sorghum are acceptable base starches so long as they have an apparent amylose content greater than 40%. Suitable sources for such high amylose starch include high amylose corn starch and high amylose barley starch. Preferably, high amylose corn starch is used.

The apparent amylose content must be above 40% and more preferably must be 50% or greater. Good results have been obtained with a corn starch having an apparent amylose content of 50-65%. Such a high amylose corn starch is available from American Maize-Products Company under the trademark AMAIZO® 5.

The term 'amylose content' or 'apparent amylose content' of the base starch as used in the specification and claims means the amylose content of the base starch as determined by conventional spectrophotometric iodine absorption, Sowbhagya and Bhattachariya, Die Starke 23rd January 1971 Nr. 2, page 53-56.

The high amylose starch hydrolysate has a DE of from 5 to 15. Good results have been obtained when the DE is from 5 to 9.

The dextrose equivalent, DE, is a conventional term used to described the degree of conversion of starch to starch hydrolysate. There are a number of methods of determining DE. For the purposes of this specification and the claims herein, the DE is determined by Lane-Eynon Procedure (E 26, Standard Analytical Methods, revision 5/27/68, CRA Manual).

The high amylose starch hydrolysate of the present invention has a peak average molecular weight of less than 10,000 when measured by Gel Permeation Chromatography. More preferably, the high amylose starch hydrolysate of the present invention has a peak average molecular weight less than 7,500 and even more preferably 6,000 and below.

Peak average molecular weight is determined by the Gel Permeation Chromatograph using two ULTRAHYDROGEL™ linear columns in series, each measuring 11.81 inches (30 cm) in height and .31 inches (.78 cm) in diameter. 100 microlitres of a 0.1% wt./vol. sample was eluted with 0.1M NaNO₃ containing 0.02% NaNO₃ (40°C) at a flow rate of 0.8 cc/minute. A Refractive Index detector maintained at 40°C is used. The peak average molecular weight is the value of the molecular weight at the highest point of the chromatogram generated by the chromatograph.

The gels ride from the fat replacer of the present invention must have a gel strength of at least 25 grams and, preferably, a gel strength of 100 to 1200 grams. More preferred is a gel strength between 500 and 1100.

The gel strength of the fat replacer of the present invention is determined by preparing an aqueous dispersion of the high amylose starch hydrolysate at 25% solids and cooking the dispersion at 95°C for 15 minutes. The paste is then placed in 4 ounce (113 g) short glass jars, the jars covered and place into cold storage, 4°C, for 16 hours. After 16 hours at 4°C the jars are allowed to stand at ambient temperature, 25°C, for 1 1/2 hours. A Stevens LFRA Texture Analyser is then used to measure the gel strength. Plunger No. 5 is used at a speed of 0.2 mm/second and a distance of 4 mm. The average of 3 readings is used to determine the gel strength.

The term 'foodstuffs' as used in the specification and claims means foods that have been formulated from more than one component. Examples of such foodstuffs are spoonable and pourable salad dressings, frozen novelties, ice cream, whipping toppings, icings and sauces.

Replacing the fat and/or oil in order to make a reduced fat foodstuff in accordance with the present invention is accomplished by replacing at least a portion of the fat and/or oil used in formulating the foodstuff with water and an effective amount of a starch hydrolysate of the present invention. Suitably the fat replacer of the present invention is substituted for the fat and/or oil on a 1 to 1 weight basis, i.e. 1 gram of fat replacer for 1 gram of fat and/or oil.

Since the caloric content of fat and/or oil is 9 calories (38 Joules) per gram and the caloric content of the fat replacer of the present invention in a 25% solids dispersion is 1 calorie (4.2 Joules) per gram, a caloric decrease of more than 90% is obtained by replacing all of the fat and/or oil.

Typically, formulated foodstuffs contain up to 80% by weight fat and/or oil. Preferably, in any foodstuffs formulated with a fat and/or oil, up to 50% by weight of the fat and/or oil is replace with the water and an effective amount of the starch hydrolysate of the present invention and more preferably up to 90% of the fat and/or oil is replaced.

The high amylose starch hydrolysate of the present invention is preferably ride by treating a slurry of high amylose starch with bacterial alpha amylase to the desired DE. More specifically, a high amylose starch is slurried with water to 20% solids and the pH is adjusted to 6. To this slurry is added 0.4% by weight bacterial alpha amylase based on dry starch weight. This slurry is then subjected to a prepaster at a temperature of 104°C to gelatinise the starch. The starch slurry is then held at 80°C long enough to convert the starch to a hydrolysate having a DE of from 5 to 15, typically 30 to 45 minutes. The enzyme is then inactivated by adjusting the pH to 2.5. After inactivating the enzyme the pH is adjusted to 4.5 and the slurry is filtered and carbon bleached at 90°C. The slurry is then dried by evaporation followed by spray drying in a conventional manner. Preferably the high amylose starch hydrolysate is dried to a moisture of less than 12% and more preferably, 4% and below.

These and other aspects of the present invention may be more fully understood by reference to the following examples.

### Example 1

This example illustrates making a frozen novelty in accordance with the present invention. Two formulations were made. Each formulation was found to have comparable taste, appearance and mouthfeel. Table I below illustrates these formulations.

**Table I**

| Ingredient | Control % | 50% Fat Replaced Test % |
|---|---|---|
| Butter, unsweetened | 15.6 | 7.8 |
| Milk, 3.5% fat | 15.6 | 7.8 |
| Non-fat dried milk | 9.6 | 10.5 |
| Sugar | 12.0 | 12.0 |
| Corn syrup 43/42 | 4.0 | 4.0 |
| Sea Kem GP 418 | 0.2 | 0.2 |
| Lodex 10 | -- | 4.5 |
| Water | 43.0 | 47.2 |
| Fat replacer | -- | 6.0 |

The numbers in Table I are based on percent by weight of formulation. The fat replacer was a paste made from a high amylose starch hydrolysate wherein the DE was 8.6 and the apparent amylose content of the base starch was 60%. The paste was made by forming an aqueous dispersion at a solids content of 25% by weight, heating the dispersion to 100°C and holding the dispersion at that temperature for 5 minutes. The dispersion was stirred constantly during heating.

The gel strength of the fat replacer was about 695 grams and the hydrolysate had a peak average molecular weight of 2,874. Both gel strength and peak average molecular weight were determined as outlined above.

Both formulations were prepared by adding the preblended dry components to the butter, milk, water and corn syrup. The mix was then pasteurised, homogenised, cooled to 4°C and aged for 24 hours. The mix was then processed in an ice cream maker. The fat replacer paste was combined with the butter, milk, water and corn syrup initially.

### Example 2

This example illustrates making a chocolate chip cookie with the fat replacer of the present invention. The cookies made by this formulation were found to have good taste, appearance and mouthfeel. Control was a chewy cookie while the test was a cake-like cookie.

**Table II**

| Ingredient | Control % | 95% Fat Replaced Test % |
|---|---|---|
| Brown sugar | 11.64 | 11.64 |
| Sugar | 5.21 | 5.21 |
| Frodex 55 | 6.39 | 6.39 |
| Salt | .48 | .48 |
| Non-fat dried milk | 1.42 | 1.42 |
| Vegetable shortening | 15.33 | .77 |
| Fat replacer | - | 14.56 |
| Lecithin | .3 | .3 |
| Whole eggs | 11.36 | 11.36 |
| Water | 8.12 | 8.12 |
| Vanilla Flavour, 10X | .01 | .01 |
| Baking soda | .25 | .25 |
| Instant Polar Gel 'C' | 4.27 | 4.27 |
| Cake flour | 19.22 | 19.22 |
| Chocolate chips, 2000 ct. | 16.00 | 16.00 |

The numbers in Table II are based on the percent by weight formulation. The fat replacer used In this formulation is the same as in Example 1 above.

The cookies were made by creaming the sugar and shortening and then adding the dry ingredients to the creamed mixture. Then the liquid together with the fat replacer was added and mixed in. Finally the chocolate chips were added and the dough was dispersed and baked in a 190°C oven for 12 minutes.

### Example 3

This example compares the gel strength of the fat replacer of the present invention to other starch hydrolysates.

**Table III**

| Starch Hydrolysate | Base Starch | Apparent Amylose % | DE | Gel Strength (Grams) |
|---|---|---|---|---|
| 1 | Corn | 58 | 6.4 | 1171 |
| 2 | Corn | 58 | 8.6 | 695 |
| 3 | Corn | 58 | 10 | 115 |
| 4 | Potato | 20 | 6.4 | 210 |
| 5 | Potato | 20 | 10 | 33 |
| 6 | Corn | 2 | 5 | 0 |
| 7 | Corn | 2 | 10 | 0 |
| 8 | Tapioca | 17 | 1.6 | 210 |
| 9 | Corn | 28 | 4.0 | 125 |
| 10 | Tapioca | 17 | 6.0 | 44 |
| 11 | Potato | 20 | 1.4 | 874 |

The gel strength measurements were made in the manner as outlined above and the dextrose equivalents were likewise measured in the manner outlined above.

Starch hydrolysates 1-3, 6 and 7 were made in a continuous process where a slurry of starch and water was made to 20% solids. The pH of the slurry was adjusted to 6 and bacterial alpha amylase was added to the slurry. The slurry was then subjected to a prepaster which raised the temperature of the slurry to 104°C and the slurry was subsequently held at 106°C in plug flow convertors until the indicated DE was obtained. Then the enzyme was deactivated by adjusting the pH and the slurry was subsequently filtered, carbon bleached and spray dried to produce a dry starch hydrolysate. The base starch used for 1-3 was a high amylose corn starch while 6-7 was a waxy corn starch.

Starch hydrolysates 4 and 5 were made in accordance with Example 1 of US Patent number 3,962,465 except different DEs were obtained. It is readily evident that the 6.4 DE and 10 DE material made in accordance with the teachings of the '465 patent did not have the gel strength of the fat replacer of the present invention.

Starch hydrolysate 8 was a commercial product sold by National Starch and Chemical Company under the trade name N-OIL. This is thought to be made from a tapioca starch and the apparent amylose content listed in Table III above for N-OIL is that of a typical tapioca starch, see 10.

Starch hydrolysate 9 is a conventional common corn starch hydrolysate converted by enzyme to the desired DE while starch hydrolysate 10 is a conventional tapioca starch hydrolysate also made by an enzymatic process to the desired DE. Starch hydrolysates 9 and 10 were made by making a slurry with the starch to a solids level of 20%; adjusting the pH to 6; adding bacterial alpha amylase to the slurry; heating the slurry to 80°C and holding the slurry at this temperature until the desired DE was obtained. The enzyme was then inactivated and the slurry filtered, bleached and dried to form a dried starch hydrolysate.

Starch hydrolysate 11 was a commercial product sold by Avebe under the name PASELLI SA-2. Such material is thought to be made from a potato starch base. The apparent amylose content listed in Table III is that of a typical potato starch, see 4 and 5.

It is apparent from Table III above that the fat replacer of the present invention has both a higher amylose content and gel strength than starch hydrolysates of comparable DEs.

### Example 4

This example compares the peak average molecular weights of the fat replacer of the present invention with other starch hydrolysates.

**Table IV**

| Starch Hydrolysate | Base Starch | Apparent Amylose (%) | DE | Peak Average Molecular Weight |
|---|---|---|---|---|
| 12 | Potato | 20 | 1.4 | 177,500 |
| 13 | Tapioca | 17 | 0.3 | 45,300 |
| 14 | Tapioca | 17 | 0 | 167,500 |
| 15 | Corn | 58 | 5.3 | 4,180 |
| 16 | Corn | 58 | 8.6 | 2,874 |
| 17 | Potato | 20 | 6.4 | 24,460 |

Starch hydrolysate 12 was a commercial product sold by Avebe under the name PASELLI AS-2. It was thought that this material was made from potato starch and the amylose content as reported above is typical for potato starches.

Starch hydrolysates 13 and 14 were commercial products sold by National Starch and Chemical Company under the names N-OIL and INSTANT N-OIL respectively.

Starch hydrolysates 15 and 16 were made in accordance with the present invention.

Starch hydrolysate 17 was made in accordance with Example 1 of US Patent number 3,962,465.

## Claims

1. A method for preparing a foodstuff with reduced fat comprising the step of replacing at least a portion of the fat and/or oil in the foodstuff with water and an effective amount of a high amylose starch hydrolysate having a DE of from 5 to 15 and a peak average molecular weight less than 10,000, said starch hydrolysate being made from a base starch having an apparent amylose content greater than 40%.

2. The method of Claim 1, wherein the starch has an apparent amylose content of 60%.

3. The method of Claim 1, wherein the high amylose starch hydrolysate is in the form of an aqueous dispersion.

4. The method of Claim 3, wherein the aqueous dispersion is a paste.

5. The method of Claim 3 or 4, wherein the aqueous dispersion has a solids content of from 5 to 50% by weight.

6. The method of Claim 1, wherein the foodstuff is a spoonable or pourable salad dressing, a frozen novelty, an ice cream, a whipping topping, an icing, a cookie or a sauce.

7. The method of Claim 1, wherein the starch hydrolysate is obtained from corn.

8. The method of Claim 1, wherein up to 90% of the fat and/or oil is replaced with the high amylose starch hydrolysate.

9. A method for preparing a foodstuff with reduced fat comprising the following sequential steps:
(a) forming a slurry of a high amylose corn starch having an apparent amylose content of greater than 40%;
(b) mixing 0.4% by weight bacterial alpha amylase based on dry starch weight;
(c) gelatinising said corn starch at a temperature of 105°C;
(d) holding said gelatinised corn starch at 80°C until the DE reaches from 5 to 9;
(e) recovering a high amylose corn starch hydrolysate having a DE of from 5 to 9; and
(f) replacing up to 90% of the fat and/or oil in the foodstuff with said water and high amylose corn starch hydrolysate.

10. The method of Claim 9, wherein the high amylose corn starch hydrolysate is in the form of a paste with a solids content of from 5 to 50% when added to said foodstuff.

## Patentansprüche

1. Verfahren zur Herstellung eines Nahrungsmittels mit reduziertem Fettgehalt, welches den Schritt umfaßt, das Fett und/oder Öl zumindest teilweise durch Wasser und einen wirksamen Anteil an Hochamylose-Stärkehydrolysat mit einem DE-Wert (dextrose equivalent; Dextroseeinheit) von 5 bis 15 und einem Höchstwert der mittleren relativen Molekülmasse von weniger als 10,000 zu ersetzen, wobei das Stärkehydrolysat aus einer Grundstärke mit einem scheinbaren Amylosegehalt von mehr als 40 % hergestellt wird.

2. Verfahren nach Anspruch 1, worin die Stärke einen scheinbaren Amylosegehalt von 60 % besitzt.

3. Verfahren nach Anspruch 1, worin das Hochamylose-Stärkehydrolysat in Form einer wässrigen Dispersion vorliegt.

4. Verfahren nach Anspruch 3, worin die wässrige Dispersion eine Paste ist.

5. Verfahren nach Anspruch 3 oder Anspruch 4, worin die wässrige Dispersion über einen Feststoffgehalt von 5 bis 50 Gew.-% verfügt.

6. Verfahren nach Anspruch 1, worin das Nahrungsmittel ein löffelbares oder vergießbares Salatdressing, eine gefrorene Neuheit, eine Eiskrem, ein durch Schlagen hergestellter Überzug, ein Guß, ein Keks oder eine Sauce ist.

7. Verfahren nach Anspruch 1, worin das Stärkehydrolysat aus Mais gewonnen wird.

8. Verfahren nach Anspruch 1, worin bis zu 90 % des Fetts und/oder Öls durch Hochamylose-Stärkehydrolysat ersetzt werden.

9. Verfahren zur Herstellung eines Nahrungsmittels mit reduziertem Fettgehalt, welches die folgenden aufeinanderfolgenden Schritte umfaßt :
(a) die Anfertigung eines dünnflüssigen Breis aus Hochamylose-Maisstärke mit einem scheinbaren Amylosegehalt von mehr als 40 % ;
(b) die Vermengung von 0,4 Gew.-% bakterieller α- Amylase auf der Grundlage des Trockenstärkegewichts ;
(c) die Gelatinisierung der Maisstärke bei einer Temperatur von 105° C ;
(d) das Einwirken einer Temperatur von 80° C auf die gelierte Maisstärke bis der DE-Wert 5 bis 9 erreicht ;
(e) die Rückgewinnung von Hochamylose-Maisstärke mit einem DE-Wert von 5 bis 9 ; und
(f) das Ersetzen von bis zu 90 % des Fett- und/oder Ölgehalts des Nahrungsmittels durch Wasser und das Hochamylose-Maisstärkehydrolysat.

10. Verfahren nach Anspruch 9, worin das Hochamylose-Maisstärkehydrolysat, wenn es dem Nahrungsmittel zugefügt wird, in Form einer Paste mit einem Feststoffgehalt von 5 bis 50 % vorliegt.

## Revendications

1. Méthode de préparation d'un produit alimentaire à teneur réduite en matière grasse, comprenant l'étape consistant à remplacer au moins une partie de la graisse et/ou de l'huile dans le produit alimentaire par de l'eau et une quantité efficace d'un hydrolysat d'amidon à teneur élevée en amylose, ayant un équivalent dextrose (DE) compris entre 5 et 15 et un poids moléculaire moyen au pic inférieur à 10 000, ledit hydrolysat d'amidon étant produit à partir d'un amidon de base ayant une teneur apparente en amylose supérieure à 40 %.

2. Méthode selon la revendication 1 dans laquelle l'amidon a une teneur apparente en amylose de 60 %.

3. Méthode selon la revendication 1 dans laquelle l'hydrolysat d'amidon à teneur élevée en amylose est sous la forme d'une dispersion aqueuse.

4. Méthode selon la revendication 3 dans laquelle la dispersion aqueuse est une pâte.

5. Méthode selon les revendications 3 ou 4 dans laquelle la dispersion aqueuse a une teneur en matières solides de 5 à 50 % en poids.

6. Méthode selon la revendication 1 dans laquelle le produit alimentaire est un assaisonnement pour salade qui peut être prélevé à la cuiller ou versé, une nouvelle formulation glacée, une crème glacée, une garniture de crème fouettée, un glaçage, un biscuit ou une sauce.

7. Méthode selon la revendication 1, dans laquelle l'hydrolysat d'amidon est obtenu à partir du maïs.

8. Méthode selon la revendication 1, dans laquelle on remplace jusqu'à 90 % de la graisse et/ou de l'huile par de l'hydrolysat d'amidon à teneur élevée en amylose.

9. Méthode de préparation d'un produit alimentaire à teneur réduite en matière grasse, comprenant les étapes successives suivantes :
(a) former une pâte d'amidon de maïs à teneur élevée en amylose, ayant une teneur apparente en amylose supérieure à 40 % ;
(b) mélanger 0,4 % en poids d'α-amylase bactérienne, par rapport au poids sec d'amidon ;
(c) gélatiniser ledit amidon de maïs à une température de 105°C ;
(d) maintenir ledit amidon de maïs gélatinisé à 80°C jusqu'à obtention d'un équivalent dextrose compris entre 5 et 9 ;
(e) récupérer un hydrolysat d'amidon de maïs à teneur élevée en amylose, ayant un équivalent dextrose compris entre 5 et 9 ; et
(f) remplacer jusqu'à 90 % de la graisse et/ou de l'huile du produit alimentaire par lesdits eau et hydrolysat d'amidon de maïs à teneur élevée en amylose.

10. Méthode selon la revendication 9, dans laquelle l'hydrolysat d'amidon de maïs à teneur élevée en amylose est sous la forme d'une pâte à teneur en matières solides comprise entre 5 et 50 %, quand elle est ajoutée au dit produit alimentaire.
